# EUROPEAN PATENT SPECIFICATION

(11) **EP 2 640 516 B1**
(45) Date of publication and mention of the grant of the patent: **15.05.2019**
(21) Application number: 11791491.1
(22) Date of filing: 16.11.2011
(51) Int. Cl.: B01L 3/00, G01N 35/00

(54) **SOLID SUPPORT FOR USE IN ANALYTE DETECTION**
FESTER TRÄGER ZUR VERWENDUNG BEIM NACHWEIS VON ANALYTEN
SUPPORT SOLIDE SERVANT À LA DÉTECTION D'ANALYTES

(30) Priority: 16.11.2010 EP 10191332
(43) Date of publication of application: 25.09.2013
(73) Proprietor: D-Tek S.A., 7000 Mons (BE)
(72) Inventor: VIGNERON, Alain, Georges, André, 7332 Sirault (BE); BODART, Nicolas, 7331 Baudour (BE); AUTEM, Benoît, Valère, Jacques, Ghislain, 7000 Mons (BE)
(74) Representative: De Clercq, Annelies
(86) International application number: PCT/EP2011/070241
(87) International publication number: WO 2012/066032

(56) References cited:
- EP-A1- 1 221 340
- GB-A- 2 404 735
- US-A- 4 943 522
- US-A- 5 935 864
- US-A1- 2004 014 203
- US-A1- 2007 054 414
- US-A1- 2007 116 597
- US-A1- 2009 320 623

## Description

### FIELD OF THE INVENTION

The present invention relates to a solid support suitable for housing a membrane for analyte detection. The invention also relates to the use of a solid support in a method for detecting at least one analyte in a biological sample, for example using immunoassay.

### BACKGROUND OF THE INVENTION

Several approaches have been developed for detection of analytes in a biological sample for routine diagnostics in diagnostic laboratories via for instance immunoassays.

In essence, immunoassays can be performed in a liquid-based assay using e.g. a plastic well (e.g. in a 96 well plate) with certain immunoreagents. Alternatively, the immunoassay detection can be done on membrane based system (e.g. test-strips). The plastic well-based system generally is limited to the detection of a single analyte while recent membrane-based assays have been developed to enable the simultaneous detection and semi-quantitation of several different analytes per assay.

US 2007/0054414 discloses a device, for detecting an analyte in a sample, comprising a sample pad for collecting the sample, a test strip coupled to the sample pad, and a housing enclosing and allowing visualization of the test strip.

US 2007/0116597 describes a device for collecting and transporting aqueous fluid from the oral cavity to a lateral chromatographic strip. The assay device comprises a lateral flow chromatography strip and a collection strip comprising a porous matrix. The assay device can optionally include a blocking strip between the porous matrix and the lateral flow chromatography strip. The blocking strip can be impregnated with buffers to adjust the pH (e.g., to pH 7.5) of the oral fluid for compatibility with the lateral flow chromatography assay.

US 2009/0320623 concerns a device having a holding or positioning device comprising a mixing chamber, a lid for closing the mixing chamber, and a fluid opening for a fluid passage from the mixing chamber to the test strip holder.

One of the most important issues in the field of detection of analytes in biological samples is that it has to be possible to automate the process, mainly for ensuring repeatability and reducing handling cost of the assay. The so-called multiple-well plate-based assays can be easily used in a variety of liquid filling and aspiration devices that are commercially available. For the test strips format however, very few automating devices actually exist, since it is less easy to automatically incubate and rinse a test strip in order to perform the immune reaction and detection and the method has remained less popular than the multiple-well plate- based format over the past years. Nevertheless due to the recent and fast growing interest for the test-strip format, some generic tools have recently become available but are costly and technically limited.

The prior art tools have the disadvantage that they can manage only a limited number of different fluids per run. This limits the number of different tests that can be performed in a same run, if the different tests require different fluids to be managed in order to perform the immune reaction and detection.

Also, manual sample loading is generally a problem since access to the incubation channels with a laboratory pipette is not easy and there is a significant risk of cross-channel contamination.

As a further disadvantage, the pumps and tubing systems used in prior art tools to fill and aspirate incubation channels with fluids generate void volumes that are economically unacceptable for single test runs.

Finally, the pumps and tubing systems used in prior art tools to fill and aspirate incubation channels with fluids require specific rinsing and cleaning procedures of the tool, since tubings are susceptible to have contained potentially hazardous material contained in fluids.

It is also an object of the present invention to overcome or ameliorate at least one of the disadvantages of the art, or to provide a useful alternative thereto.

### SUMMARY OF THE INVENTION

The present invention provides a device that facilitates sample loading and allows automated detection of at least one analyte in a sample.

The present invention provides subject-matter as set forth in any one and all of the appended claims 1 to 15.

In a first aspect, the present invention relates to a solid support for housing at least one assay membrane comprising: a body having a generally planar shape defining a longitudinal axis, wherein said body comprises at least one compartment for holding at least one assay membrane and a sample chamber provided on one end of the longitudinal axis of said body, wherein said sample chamber comprises at least one opening, characterised in that said sample chamber is sized such that a sample is held within the sample chamber by means of capillarity, and said sample chamber is separated from said at least one compartment by a non-detachable fluid-impermeable barrier.

In an embodiment, the solid support for housing at least one assay membrane suitable for detecting analytes in a sample comprises: a body having a generally planar shape defining a longitudinal axis, and a sample chamber provided on one end of the longitudinal axis of said body, wherein said sample chamber comprises at least one opening, and wherein when said sample chamber comprises at least two openings, the central axis connecting the centers of each opening is not perpendicular to the surface of the body.

In a second aspect, the present invention concerns the use of at least one solid support according to the invention for housing at least one assay membrane suitable for detecting analytes in a sample. The invention also relates to the use of at least one solid support according to the invention in a method for detecting at least one analyte in a sample, preferably the invention relates to the use of said at least one solid support in an immunoassay.

Advantageously, the present inventors have found that a solid support according to the present invention when used in an assay facilitates sample loading and is amenable to automation. Furthermore, a solid support according to the present invention allows careful control of the quantity of sample introduced in the assay. Such a solid support further prevents direct contact of the sample chamber and the compartment for holding said at least one assay membrane prior to immersion of the solid support in a fluid.

In a third aspect, the present invention provides a kit for detecting at least one analyte in a biological sample comprising at least one solid support according to the present invention and at least on assay membrane. In addition, the invention provides a kit for detecting at least one analyte in a biological sample comprising at least one solid support as set forth above and at least one container. Furthermore, the invention provides a kit comprising at least one solid support according to the present invention, at least one assay membrane, at least one container and at least one machine for automated detection of an analyte in a biological sample.

The kits according to the invention allow detection method to be automated. Automated detection of an analyte in a biological sample has several advantages such as reduced cost due to a decreased need of manpower and improved repeatability because standard procedures can be followed. Automated detection can furthermore lead to an automated validation of the results. Furthermore, the kits according to the invention can contain controls, calibration curve and ligands for the analytes to be detected on the same assay membrane, thus allowing the quantitative detection of the analytes while being at the same time very economical because no additional external controls are needed. Advantageously, the kits combine the possibility to perform simultaneous analysis of multiple samples with the possibility to test multiple parameters or combinations of parameters, whatever the fluids required to perform the immune reaction and detection for each test are the same or not. Furthermore, since each test can be an all-in-one, self consistent system (test strip including controls, calibration curve, ligands, and container comprising fluids), the kits can be used for performing the analysis of small series of samples, or even a single sample, without significant economical loss compared to large series. This allows cost-effective complementary testing of selected samples in order to obtain supplementary results for example for a parameter absent in a previous measurement and/or in order to confirm or repeat results.

In a further aspect, the present invention provides a method for detecting at least one analyte in a biological sample, comprising the steps of: (a) inserting in at least one solid support of the invention at least one assay membrane comprising at least one ligand which is specific to at least one analyte to be detected, (b) loading said biological sample in the sample chamber of said at least one solid support, (c) inserting said loaded at least one solid support of step (b) in said at least one container comprising at least one fluid, and (d) detecting at least one analyte.

Advantageously, the method of the present invention allows the performance of a single test, or the simultaneous performance of multiple different tests (horizontal multiplexing) which in their turn each allow the detection of a single parameter or multiple parameters (vertical multiplexing). This provides unequalled flexibility in testing or analysis of various analytes in a biological sample.

These and further aspects and embodiments of the invention are hereunder further explained in the following sections and in the claims, and illustrated by non-limiting figures. The reference numbers relate to the hereto-annexed figures.

### BRIEF DESCRIPTION OF THE FIGURES

Figure 1 schematically illustrates a solid support according to an embodiment of the invention.
Figures 2A and 2B schematically illustrate the end part of a solid support according to an embodiment of the invention.
Figure 3 schematically illustrates a solid support housing an assay membrane according to an embodiment of the invention.
Figure 4 schematically illustrates a solid support array according to an embodiment of the invention.
Figure 5 schematically illustrates a kit comprising solid support arrays and container arrays according to an embodiment of the invention.
Figure 6 schematically illustrates a machine for performing an automated assay according to an embodiment of the invention.
Figure 7A schematically illustrates a front view of an enlarged end part of a solid support according to an embodiment of the invention.
Figure 7B schematically illustrates the rear view of the solid support illustrated in Figure 7A.
Figure 7C schematically illustrates the side view of a cross-section along the longitudinal axis A-A' of the solid support illustrated in Figure 7A.

### DETAILED DESCRIPTION OF THE INVENTION

In the following passages, different aspects of the invention are described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical ranges by endpoints includes all numbers and fractions subsumed within the respective ranges, as well as the recited endpoints.

The present invention provides a solid support for housing at least one assay membrane comprising: a body having a generally planar shape defining a longitudinal axis, wherein said body comprises at least one compartment for holding at least one assay membrane and a sample chamber provided on one end of the longitudinal axis of said body, wherein said sample chamber comprises at least one opening, characterised in that said sample chamber is sized such that a sample is held within the sample chamber by means of capillarity, and said sample chamber is separated from said at least one compartment by a non-detachable fluid-impermeable barrier.

The terms "non-detachable barrier", "permanent barrier" or "non-removable barrier" can be used interchangeably herein and generally refer to a barrier which can not be separated or disconnected from its association with another means such as for instance with the solid support.

The terms "fluid-impermeable barrier" or "impermeable barrier" generally refer to a barrier not permitting passage of a fluid such as for instance of a fluidic biological sample.

In an embodiment, the non-detachable barrier separating the sample chamber from at least one compartment for holding at least one assay membrane may be a wall of the sample chamber or a part of said wall. Such barrier advantageously allows to retain a biological sample in fluid isolation from at least one compartment for holding at least one assay membrane prior to insertion of the solid support into a container comprising a fluid.

In an embodiment, the solid support for housing at least one assay membrane and for insertion in a container comprising a fluid comprises: a body having a generally planar shape defining a longitudinal axis, wherein said body comprises at least one compartment for holding at least one assay membrane and a sample chamber for receiving a biological sample provided on one end of the longitudinal axis of said body, wherein said sample chamber comprises at least one opening, and wherein said sample chamber is separated from said at least one compartment by a non-detachable barrier configured to prevent the flow of said biological sample to said compartment prior to insertion of said solid support into said container. In a further embodiment, said sample chamber is separated from said at least one compartment by a non-detachable barrier configured to retain said biological sample in fluid isolation from said compartment prior to insertion of said solid support into said container comprising a fluid.

In an embodiment, the solid support suitable for housing at least one membrane comprises: a body having a generally planar shape defining a longitudinal axis A-A', and a sample chamber provided on one end of the longitudinal axis of said body, wherein said sample chamber comprises at least one opening, and wherein when said sample chamber comprises at least two openings, each opening having a central axis (running perpendicular to the surface of the opening), then the axes of said two opening are not co-axial.

In an embodiment, the solid support for housing at least one assay membrane comprises: a body having a generally planar shape defining a longitudinal axis, wherein said body comprises at least one compartment for holding at least one assay membrane and a sample chamber provided on one end of the longitudinal axis of said body, wherein said sample chamber comprises at least two openings, wherein the central axes of said at least two openings are not coaxial and wherein said sample chamber is separated from said at least one compartment by a non-detachable or non-removable barrier.

As used herein the term "solid support" can be interchangeably and synonymously referred as "housing" or "holder", and refers to any device suitable for housing an assay membrane (also referred herein as test membrane) and which comprises at least one sample chamber comprising at least one opening, and wherein when said sample chamber comprises at least two openings, each opening having a central axis (running perpendicular to the surface of the opening), said axes are not co-axial. The provision of a sample chamber on the solid support facilitates sample loading, improves the reliability of tests such as immunoassays being conducted using the solid support and also enables such tests to be automated. A solid support wherein said sample chamber is separated from said at least one compartment by a non-removable barrier advantageously prevents direct contact between the sample chamber and the compartment for holding at least one assay membrane prior to insertion of the solid support in a fluid.

In an embodiment, said sample chamber comprises only one opening. In a preferred embodiment said sample chamber comprises at least two openings, wherein the central axes of said at least two openings are not coaxial. Preferably, said sample chamber comprises two openings, wherein the central axis connecting the centers of each opening is not perpendicular to the surface of the body. Having at least two openings such as for example two openings advantageously allows air bubbles to escape from the sample chamber.

In an embodiment, the solid support for housing at least one assay membrane comprises: a body having a generally planar shape defining a longitudinal axis, wherein said body comprises at least one compartment for holding at least one assay membrane and a sample chamber provided on one end of the longitudinal axis of said body, wherein said sample chamber comprises two openings, wherein the central axes of said two openings are not co-axial and wherein said sample chamber is separated from said at least one compartment by a non-detachable barrier.

In an embodiment, the solid support defines a front face and a rear face and at least one opening of said sample chamber is located on the front face of said solid support. In another embodiment, at least one opening of said sample chamber is located on the bottom face of said solid support.

Preferably, said sample chamber comprises two openings, the first opening being located on the front face of said solid support and the second opening being located on the bottom face of said solid support.

In the context of the claimed invention, the sample chamber is sized such that the sample is held within the sample chamber by means of capillarity and possibly also by means of the surface tension of the sample. In this regard, the sample chamber can have any suitable geometric shapes, including, for example, cubes, cuboids, triangular prisms, cones, square based pyramids, triangular based pyramids, hemispheres and cylinders. The chamber can define a cavity between 1 mm³ and 50 mm³, preferably between 1 mm³ and 40 mm³, preferably between 1 mm³ and 30 mm³, and more preferably between 1 and 25 mm³. For example, the chamber cavity can be sized such as to be able to hold about 20 µl of liquid sample.

Preferably, the sample chamber has the shape of a trapezoidal prism defining six surfaces of which four surfaces are of essentially rectangular shape and two surfaces are of essentially trapezoidal shape.

The openings of the sample chamber can have any shape to allow introduction and/or release of said biological sample. Preferably, said opening is a round opening, a square opening or a rectangular opening. Preferably, when the chamber comprises two openings one on the front face and one on the bottom face of the support, the front face opening is round, and the bottom face opening is rectangular. Preferably the wall surrounding the round opening is slanted.

The solid support or holder is suitable for housing at least one assay membrane. In an embodiment the body defines a rectangular hollow frame. The body of the solid support can comprise at least one compartment for holding at least one assay membrane, also referred herein as "holding compartment". Preferably, the body of the solid support comprises more than one holding compartment for holding more than one assay membrane.

The body of said solid support can also comprise at least one membrane holding means configured to maintain at least one membrane on said solid support. According to an embodiment, said at least one membrane holding means extends in a direction generally perpendicular to the longitudinal axis A-A' of the body from one side of the body to the other side of the body. This membrane holding means is also referred as "perpendicular holding means". Said perpendicular holding means can be located at the front face of the solid support. Said perpendicular holding means can also be located at the rear face of the solid support. Preferably, the body comprises more than one perpendicular holding means.

For example the body can comprise at least two perpendicular holding means located at the front face of said the support. The body can also comprise at least two perpendicular holding means located at the rear face of the support. Preferably, the body comprises at least two perpendicular holding means located at the front face of the solid support and at least one, preferably at least two perpendicular holding means located at the rear face of the solid support.

The body of the solid support can also comprise an upper handle portion provided on the top end of the support for holding/grasping and/or moving said solid support. Said upper or handle portion can be grasped manually or using an automated device.

The solid support of the present invention can be made of any suitable rigid material. Preferably the solid support is made of plastic, such as for example polystyrene, polypropylene or polycarbonate plastic. The solid support can have a substantially uniform level of opacity and can be of any uniform color or preferably can be see-through or transparent. This is particularly advantageous when the back of the assay membranes are provided with barcodes, which can then be scanned while being housed on the solid support.

In an embodiment, the present invention provides a solid support further provided with at least one assay membrane. In an embodiment, the at least one assay membrane comprises at least one ligand which is specific to at least one analyte to be detected.

In an embodiment, the solid support for housing at least one assay membrane comprises: a body having a generally planar shape defining a longitudinal axis, wherein said body comprises at least one compartment holding at least one assay membrane and a sample chamber provided on one end of the longitudinal axis of said body, wherein said sample chamber comprises at least one opening, and wherein said sample chamber is separated from said at least one compartment by a non-detachable barrier. In an embodiment, the solid support for housing at least one assay membrane and for insertion in a container comprising a fluid comprises: a body having a generally planar shape defining a longitudinal axis, wherein said body comprises at least one compartment holding at least one assay membrane and a sample chamber for receiving a biological sample provided on one end of the longitudinal axis of said body, wherein said sample chamber comprises at least one opening, and wherein said sample chamber is separated from said at least one compartment by a non-detachable barrier configured to prevent the flow of said biological sample to said at least one assay membrane prior to insertion of said solid support into said container comprising a fluid. In a further embodiment, said sample chamber is separated from said at least one compartment by a non-detachable barrier configured to retain said biological sample in fluid isolation from said at least one assay membrane prior to insertion of said solid support into said container comprising a fluid.

In a second aspect, the present invention relates to the use of the solid support of the present invention for housing at least one assay membrane. The invention also relates to the use of the present solid support in a method for detecting an analyte in a sample to be analyzed. Preferably the present invention relates to the use of the solid support housing at least one assay membrane of the present invention in an immunoassay. In an embodiment, said at least one membrane is a cellulose membrane, preferably a nitrocellulose membrane. The membrane can also be a nylon membrane or a vinyl membrane, preferably a polyvinyl membrane

In an embodiment, the at least one assay membrane for use with the present solid support comprises:
- at least one membrane optionally provided on a solid backing, and
- at least one ligand which is specific to at least one analyte to be detected and which is fixed to at least one assay zone of said at least one assay membrane.

The solid backing of the immunoassay membrane can have the form of a card or a dipstick, and is configured to be housed in the present solid support. It should be understood that, depending upon the method and circumstances, it may be necessary or desirable for the immunoassay membranes to have another form. The solid backing can be made of plastic or any suitable other material. In an embodiment, the backing support is made of polyester.

The terms "analyte" and "ligand", as used herein mean members of any specific binding pair, one of which (ligand) is immobilized on the membrane surface, and the other (analyte) is present in a sample contacted with the surface. Ligand therefore includes any capturing or catching agent immobilized on the surface, and analyte includes any specific binding partner thereto. The ligand and the analyte can be the same type of molecule depending on the concept of the assay.

The immobilization may occur through an interaction selected from different types of interactions such as ionic binding, covalent binding or hydrophobic interactions. The number of ligands coated or immobilized on the assay membrane depends on the test and may range from 1 to hundreds depending on the dimension of the membrane and the surface occupied by each ligand. The assay membrane used can comprise at least one test area or assay area. Preferably, said assay membrane comprises at least 3 assay areas, more preferably at least 5 assay areas, more preferably at least 8 assay areas. Each assay area can be designed to specifically detect one analyte in the sample.

The analyte can be any molecule for which the detection and measurement of the concentration is possible and for which a specific complementary molecule, a ligand exist. The ligand and the analyte may for example be stereo-complementary which allows the fixation of the analyte on the immunoassay membrane trough the binding with a ligand which is easy accessible at the surface of the immunoassay membrane. Without limitation, analytes that may be tested for and/or detected include drugs of abuse or their metabolites, analytes indicating the presence of an infectious agent or product of an infectious agent, allergen, pollutant, toxin, contaminant, analyte with diagnostic or medical value, antibody against any of the foregoing, and any combination thereof. For example, the analyte can be selected from the group comprising an antibody, an antigen, a protein, a hapten or a nucleic acid, preferably said analyte is an antibody, and more preferably said analyte is an auto-antibody.

In the context of the present invention, the term "ligand" includes, but is not limited to, compounds which include proteins, modified proteins, nucleic acids such as deoxyribonucleic acid, ribonucleic acid, peptide nucleic acid, haptens, antigens, antibodies, and any metabolites of these substances, as well as any other compounds (either natural or synthetic) which may be of diagnostic interest and which have a specific ligand- binding partner (i.e., the receptor moiety of the ligand- receptor assay). For example, the ligand can be selected from the group comprising an antibody, an antigen, a protein, a hapten or a nucleic acid. In an embodiment, the ligand can be selected from:
- an antibody, comprising a monoclonal antibody raised against one or more antigens of the sample, for example animal or human proteins, including antibodies, or a hapten or other organic or inorganic molecules;
- an antigen, able to make specific interactions with one or more antibodies of the sample;
- a protein, such as protein A, protein G, or protein L able to bind the Fc fragment of certain immunoglobulins;
- a natural or synthetic amino acid sequence able to make specific interactions with certain organic molecules, for example a synthetic peptide, a hapten or other organic or inorganic molecules;
- a natural or synthetic nucleotide sequence, such as for example single stranded or double stranded DNA or RNA, able to make specific interactions with a complementary nucleotide sequence.

Preferably said ligand can be an antigen, and more preferably said ligand is an auto-antigen.

The assay membrane can be used to detect specific analytes in biological samples. The biological sample may be selected from body fluid comprising serum, plasma, blood, cerebrospinal fluid, nasopharyngeal secretions, urine, semen, or saliva; food; water; culture supernatants and media; or excrement; preferably the biological sample is selected from the group comprising serum, plasma or blood.

Preferably, the at least one assay membrane to be housed in the support is an immunoassay membrane. In a preferred embodiment, the immunoassay membrane comprises:
- a membrane optionally provided on a solid backing,
- at least one ligand which is specific to at least one analyte to be detected, preferably at least one antigen which is specific to at least one antibody to be detected, more preferably at least one an auto-antigen which is specific to at least one auto-antibody to be detected,
- at least one calibration curve, comprising at least three standards of which the colors increase with increasing concentration, preferably comprising six standards of which the colors increase with increasing concentration, and
- at least one control for validation of correct handling, preferably at least three controls, at least one for validation of correct handling, at least one for validation of the performance and/or type of tracer used and at least one for validation of the signal development system.

Preferably, the standards, the at least one ligand and the at least one control are coated in at least triple on the solid support of the immunoassay membrane.

The standards of the calibration curve and the at least one control may be selected from:
- an antibody, comprising a monoclonal antibody raised against one or more antigens of the sample, for example animal or human proteins, including antibodies, or a hapten or other organic or inorganic molecules;
- an antigen, specific for one or more antibodies of the sample;
- a protein, such as protein A, protein G, or protein L able to bind the Fc fragment of certain immunoglobulins;
- a natural or synthetic amino acid sequence able to make specific interactions with certain organic molecules, for example a synthetic peptide, a hapten or other organic or inorganic molecules;
- a natural or synthetic nucleotide sequence, such as for example single stranded or double stranded DNA or RNA, able to make specific interactions with a complementary nucleotide sequence;
- an enzyme or any organic or inorganic molecule, linked or not to another organic or inorganic molecule, able to generate a detectable signal, either in the presence of a signal-generating source or naturally by its nature, for example alkaline phosphatase or peroxidase, fluorescent dyes, colloidal metal particles or light-emitting molecules.

In another aspect of the present invention, there is provided systems, kits or test kits for detection of at least one analyte in a sample. These test kits can include, separately packaged, or packaged altogether: a solid support according to the present invention, at least one assay membrane; and optionally, any additional reagents for detecting the analyte and optionally any additional reagents for treating or extracting the sample.

The term "kit" or "kit-of-part" or "system" as used herein refers to any combination of reagents or apparatus that can be used to perform a method of the invention. The kit of the invention can further include any additional reagents, buffers, excipients, containers and/or devices as required described herein or known in the art, to practice a method of the invention. Other kit elements can include casings for packaging one or more solid supports, packaging materials, solutions for use in the assay, and the like.

A set of instructions for directing a user in the use of the supports, kits or methods according to the invention will also be typically included.

In particular, the invention encompasses a system or kit for detecting at least one analyte in a biological sample comprising at least one solid support according to the invention and at least one membrane suitable for use in an assay. In an embodiment, said kit can further comprise instructions for directing a user. Said system or kit can also comprise at least one container suitable for holding at least one an assay fluid such as buffers, reagents or solvents.

Preferably, the container is non-absorbent and inert to active agents and permits insertion of a solid support according to the invention. The container may be made of glass or any suitable plastic material, such as polyethylene, polycarbonate, polyvinyl chloride (PVC), polypropylene and the like. In general, the container is intended to be disposable after use. In an embodiment, said container can comprises a plurality of compartments, wherein each compartment is adapted to receive one or more assay fluid. The container can therefore comprise several compartments adapted to receive different assay fluid.

The present invention also encompasses a system or kit for detecting at least one analyte in a biological sample comprising at least one solid support and at least one container. According to an embodiment, the solid support is adapted for dismountable insertion into said at least one container. Preferably, said at least one container is configured to allow dismountable insertion of at least one solid support of the present invention.

The present invention also encompasses a system or kit comprising a container array for use with the solid support of the present invention, wherein said container array comprises a plurality of containers connected to each other. To assist with sealing of the containers, the containers of the container array are preferably provided with an upstanding lip upon which an adhesive-backed foil or tape may be sealingly affixed.

In an embodiment, the kit can comprise a docking platform comprising a recess for docking at least one container or at least one container array. The docking platform may assist in automation of the process. The docking platform can be made of any suitable durable material.

The present invention also encompasses a system or kit comprising at least one solid support, at least one assay membrane and at least one container, and at least one machine for the automated detection of an analyte in a biological sample. In an embodiment, said kit can further comprise instructions for detecting at least one analyte in a biological sample.

In an embodiment, the machine comprises a hollow body defining a cavity configured to receive at least one container and at least one solid support according to the invention. The base of the machine can comprise a docking platform provided with at least one recess configured for docking at least one container or container array. In an embodiment, the top of the hollow body is provided with a lid operably connected to said body and configured to give access to the hollow when in open position (upright position).

In an embodiment, translation means are further provided on the upper portion of said body, said translation means being configured to grip and move the solid supports automatically and sequentially above the container or above the different compartments thereof (when the containers comprises more than one compartment). The containers can comprise several compartments, each of which can comprise different assay fluid. The translation means allow the transport of the solid support from one compartment to the next compartment of the container; In an embodiment said translation means are configured to allow horizontal movement of the solid supports. In an embodiment, said translation means are also configured to lower or raise the solid support into or from the containers in sequence, with the solid support remaining in each container or compartments thereof for a predetermined period of time. In an alternative embodiment, elevation means are provided in the cavity of the machine for lowering or raising the docking platform, thereby allowing the containers to move automatically and sequentially towards the solid support and allowing the containers to be raised to and lowered in sequence, with the solid support remaining in each container or compartments thereof for a predetermined period of time. Automatic movement of the solid support or container makes operation of the system easier and more reliable. In an embodiment, the movements within the machine are controlled to suit particular assays being carried out by the machine. In a preferred embodiment, the movements are controlled by programming the machine for example through the use of a smartcard and smartcard reader. Accordingly, the machine may have a smartcard reader, for receiving smart cards particular to specific assay protocols. The smartcards program the machine to perform the test in the manner appropriate for the particular assay.

According to an embodiment, the machine can comprise a reader means for reading the regions of said at least one membrane, said reader being arranged to move in the machine to present the various regions of said at least one membrane to the reader means.

In an embodiment, said reader comprises a light or reflectance detector and one or more light sources, preferably the reader means comprises a diode laser. A suitable non-limiting example of a reader means may be a diode laser form Micropoint Bioscience Inc. The light source(s) used in the reader means preferably comprises a pair of LED's arranged so as to uniformly illuminate the solid support in the region of the front face from where the results are to be read. In an embodiment, the machine may be further provided with control means comprising one or more operating buttons and at least one display.

In an embodiment, the machine comprises a gripper means operably connected to the translation means for grasping the solid support. Preferably the gripper means grasp the handle portion of the solid support. The gripper means is preferably adapted to simultaneously grasp the handle portion of more than one solid support, such that the machine may simultaneously move several solid supports between containers such as to allow simultaneous and multiple assays to be conducted.

A solid support, system or kit of part according to an embodiment of the present invention can be used in diagnostic tests in the medical, environmental or veterinary domain e.g. in diagnostic tests for autoimmune diseases, or other diseases such as allergies or cancer; or for detecting microorganisms or agents. Furthermore, in another embodiment, a solid support, system or kit of the present invention can be used in testing pollutants in the environment or contaminants in the alimentary and/or agricultural domain.

The present invention also relates to a method for sample delivery in a method for the detection of at least one analyte, comprising the steps of: loading the sample in the sample chamber of said solid support according to the invention and inserting the sample chamber of said solid support in at least one container comprising at least one fluid, thereby delivering said sample to said container.

The present invention also encompasses a method for detecting at least one analyte in a biological sample, comprising the steps of:
a) inserting in at least one holder according to the invention, at least one assay membrane, said membrane comprising at least one ligand which is specific to at least one analyte to be detected,
b) loading a biological sample in the sample chamber of said holder,
c) inserting the loaded holder of step (b) in at least one container comprising at least one fluid, and
d) detecting at least one analyte.

In an embodiment, said method is an automated method.

Preferably, the method comprises the steps of:
a) inserting in at least one holder according to the invention, at least one assay membrane, said assay membrane comprising at least one ligand which is specific to at least one analyte to be detected and which is fixed to at least one test zone of said at least one membrane,
b) loading a biological sample in the sample chamber of said holder,
c) inserting the loaded holder of step (b) in said at least one container comprising at least one fluid, thereby releasing said biological sample in said at least one fluid, and
d) contacting said biological sample in said fluid with said ligand, thereby binding at least one analyte in said biological sample with said ligand,
e) labeling said ligand and said at least one analyte bound thereto, by means of a marker,
f) and detecting said marker, thereby determining a signal intensity of said marker of the test zone.

In an embodiment, said marker may comprise a specific molecule complementary to the analyte and may be coupled to a detection system for example to an enzyme, a radioactive label, a fluorescent or luminescent label or a colored particle such as a polymer, gold particle or a latex particle, or a colloidal metal particle.

The method of the present invention can be used to detect specific analytes in biological samples. Preferably, immunological assays are envisaged. These immunological assays can be used for semi-quantitative or quantitative measurements of one or more analytes in a single assay with or without the use of a machine for the automated detection. In an embodiment, the signal intensity of the marker is directly in proportion to the concentration of the analyte to be detected in the biological sample.

Preferably, the method according to the invention comprises immunodot assay. Non limiting examples of suitable immunodot technology, such as the BlueDot technology (D-Tek, Mons, Belgium) include kits allowing the detection of auto-antibodies in serum of patients.

In an embodiment, the solid support according to the invention can be used in a method for detecting auto-antibody in a biological sample (for example serum) of a patient, said method comprising the steps of:
- inserting in at least one solid support of the present invention, at least one assay membrane comprising at least one auto-antigens which is fixed to at least one assay zone of said at least one assay membrane,
- loading said biological sample in the sample chamber of said at least one solid support,
- inserting said loaded solid support in at least one container comprising at least one fluid, thereby releasing said biological sample in said at least one fluid,
- specifically binding of the auto-antibodies present in the sample of the patient with auto-antigens bound to the assay membrane, thereby binding the auto-antibodies to the membrane,
- washing the membrane and auto-antibodies bound thereto to remove the sample,
- addition of a conjugate, comprising a secondary antibody directed against the auto-antibodies and wherein said secondary antibody is linked with an enzyme, thereby obtaining auto-antibody complexes,
- washing the membrane and auto-antibody complexes bound thereto to remove unbound secondary antibody,
- incubation of the membrane and auto-antibody complexes bound thereto with a colorimetric substrate,
- binding of the colorimetric substrate with the enzyme bound to the secondary antibodies of the auto-antibody complexes, thereby developing a specific color.

The appearance of a specific color on the assay membrane indicates the presence of auto-antibodies in the serum of the patient and therefore, the presence of an autoimmune disease.

The kits and method of the present invention combine the advantages of vertical multiplexing, horizontal multiplexing and automation. The term vertical multiplexing refers to the number of different parameters combined on a single immunoassay membrane. The term horizontal multiplexing relates to the number of different assays that can be performed simultaneously. The BlueDot technology combined with the solid supports according to the invention allows testing of a single parameter or multiple parameters at once. The present invention also allows simultaneous detection of even more parameters for a large number of immunoassay membranes in a single run. The vertical multiplexing or the increase in the number of parameters on an immunoassay membrane is possible due to miniaturization of the ligand dots and to reorganization of the ligands, controls and calibration curve on the assay membrane.

The tests can be interpreted for example by eye for example by comparing the obtained intensity for the analyte (for example auto-antibodies) with the intensity of a threshold. The threshold can be present on the membrane and is referred to as 'negative control' or 'cut-off'. If the intensity is higher than the 'negative control', the signal is considered as positive, if the intensity is equal or lower than the 'negative control', the signal is considered negative. The present invention allows qualitative detection, but furthermore provides quantitative measurement of the concentration of the analytes present in the sample. Quantitative measurements are possible because each assay membrane on the solid support can contain a calibration curve with more than three calibration points and controls. This internal calibration system has the additional advantage that no separate control assay membrane has to be used. Furthermore, the present invention provides a machine as described herein allowing the performance of several assays in a single run and optionally comprising a specific reader allowing the automated detection and quantitative interpretation of the results.

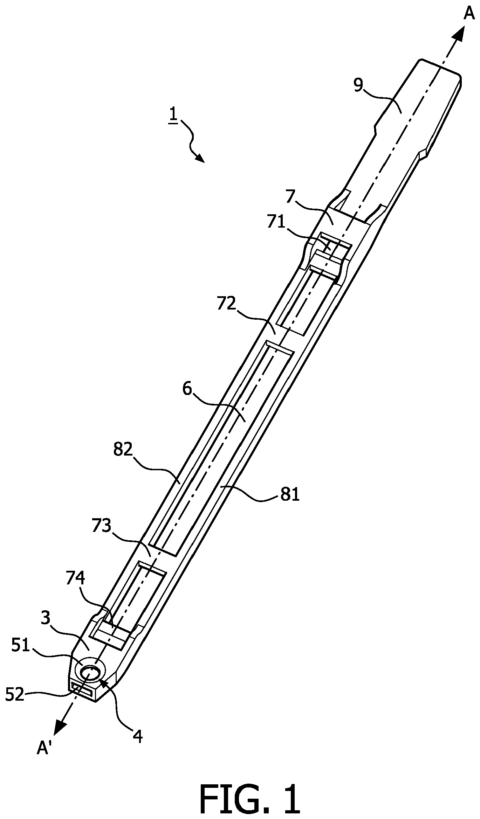

Non-limiting examples of solid support, kits and machines according to the present invention are for instance illustrated in figures 1 to 6.

Referring to figure 1, a solid support 1 is shown comprising a body 3 having a generally planar shape defining a longitudinal axis A-A' and a sample chamber 4 provided on one end of the longitudinal axis of said body 3. The ends of the longitudinal axis A-A' define the top face and the bottom face of said support 1 and the chamber 4 is provided on the bottom face of the support 1. The chamber comprises two openings 51,52, the first opening 51 being located on the front face of the support 1 and the second opening 52 being located on the bottom face of the support 1. The body 3 defines a rectangular hollow frame. The hollow frame defines a compartment 6 suitable for housing a membrane (not shown). The frame of the body 3 is provided with a plurality of perpendicular membrane holding means 7 extending in a direction generally perpendicular to the longitudinal axis A-A' of the body 3 from one side 81 of the body 3 to the other side 82 of the body 3. It will be understood that while the support 1 is illustrated with five perpendicular membrane holding means 7, 71, 72, 73 and 74, said support may be equipped with less or more holding means, such as two or more holding means. One of the perpendicular membrane holding means 7 is located at the front face of said solid support, while the four other membrane holding means 71, 72, 73 and 74 are located at the rear face of said solid support 1. The solid support is further provided with a handle portion 9 for holding and/or moving said solid support 1.

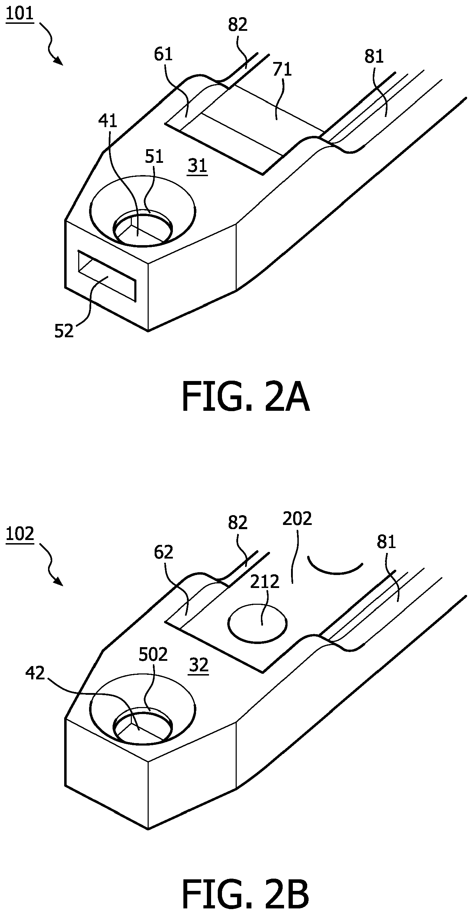

Figure 2A, schematically illustrate the end part of a solid support 101 comprising the sample chamber 41, wherein the chamber 41 is provided with two openings 51,52, wherein one opening 51 is located on the front face of said solid support and wherein one opening 52 is located on the bottom face of said solid support. In figure 2A, the body 31 of said solid support 101 comprises one compartment 61 for holding at least one membrane (not shown). The body 31 further comprises a perpendicular membrane holding means 71 extending from one side of the body 81 to the other side 82, and located at the rear face of said solid support 101.

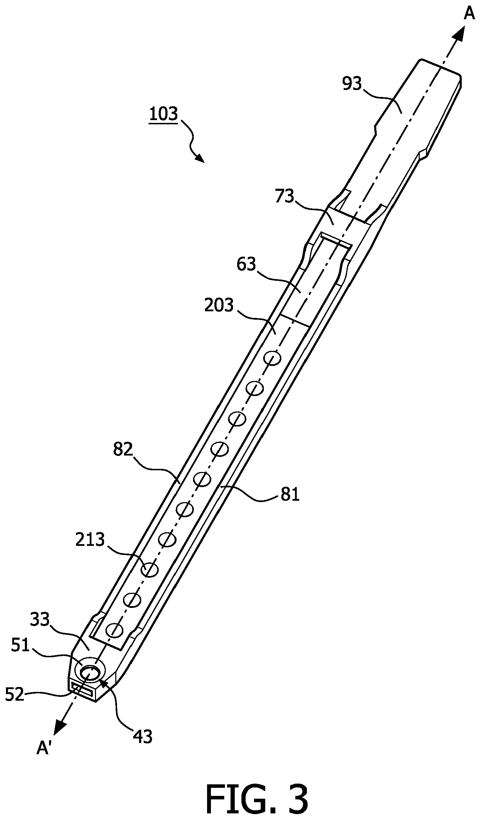

Figure 2B, schematically illustrates the end part of a solid support 102 comprising the sample chamber 42, wherein said sample chamber 42 is provided with only one opening 502 located on the front face of said solid support. The body 32 of said solid support 102 comprises one compartment 62 housing one membrane 202 between the sides 81,82 of the body 32, said membrane comprising at least one ligand 212 (only one shown) which is specific to at least one analyte to be detected and comprising two sides 81 and 82. Referring to figure 3, a solid support 103 is shown comprising a body 33 having a generally planar shape defining a longitudinal axis A-A' and a sample chamber 43. The body 33 is provided with one membrane compartment 63 housing one assay membrane 203. The assay membrane 203 is provided with a plurality of ligand 213 which are specific to analytes to be detected. The chamber 43 comprises two openings 51,52, the first opening 51 being located on the front face of the support 103 and the second opening 52 being located on the bottom face thereof. The membrane 203 is maintained by a perpendicular membrane holding means 75 extending from one side 81 of the body 33 to the other side 82 thereof and located at the front face of said solid support. It will be understood that while the support 1 is illustrated with only one perpendicular membrane holding means 75 said support may be equipped with more holding means located at the rear face of said solid support 103. The solid support is further provided with a handle portion 93 for holding and/or moving said solid support 103 when in use.

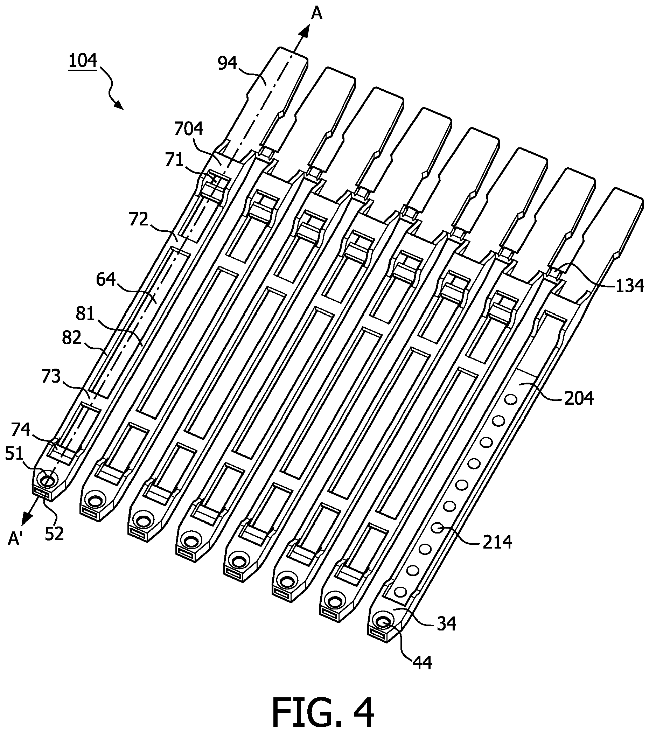

Figure 4 schematically represents a solid support array 104 comprising a plurality of solid supports 10A,10B,10C,10D,10E,10F,10G,10H connected to each other by means of a frangible portion 134 to allow the desired number of solid supports to be snapped off. It will be understood that while the array 104 is illustrated with eight solid support, said array may be equipped with less or more solid supports. In an embodiment, a solid support array 104 comprises eight solid supports connected to each other by means of a frangible portion 134. Each support comprises a body 34 at the end of which is provided a sample chamber 44. Said sample chamber 44 comprising two openings 51,52, one 51 on the front face of the support and the second 52 on the bottom face thereof. The body 3 has a rectangular hollow frame which defines a compartment 64 suitable for housing a membrane 204 (only shown provided on support 10H). The membrane 204 is provided with a plurality of ligand 214. The frame of the body 34 is provided with a plurality of perpendicular membrane holding means 71,71,72,73,74,75 extending in a direction generally perpendicular to the longitudinal axis A-A' from one side 81 of the body 34 to the other side 82 of the body 34. One of the perpendicular membrane holding means 75 is located at the front face of said solid support, while the other membrane holding means 71,72,73,74 are located at the rear face of each solid support. The solid supports are each further provided with a handle portion 94 for holding and/or moving the solid supports.

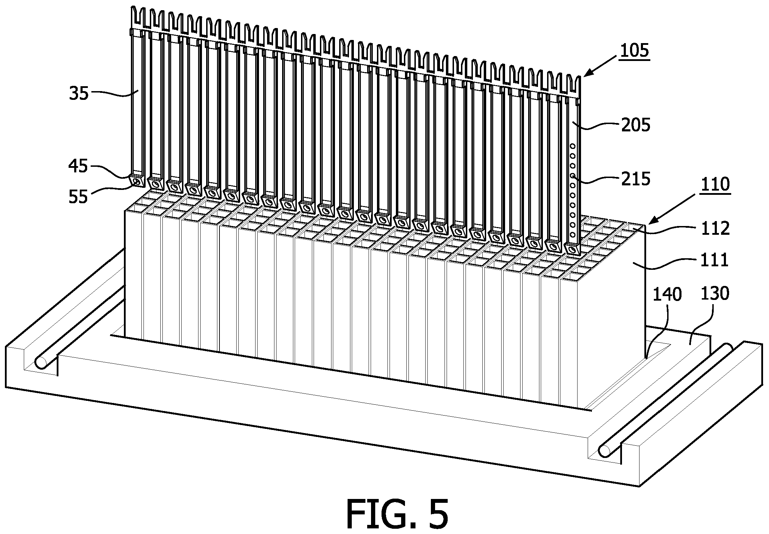

Referring to figure 5, a particular embodiment of the kit of the present invention is shown, wherein the kit comprises a container array 110 comprising a plurality of containers or cartridges 111, each container 111 comprising a plurality of compartments 112, said container array 110 being provided on a docking platform 130 comprising a recess 140 for docking said container array 110. The kit further comprises a solid support array 105 containing a plurality of solid supports, each comprising a body 35 and a sample chamber 45 at the bottom thereof, wherein each chamber has at least one opening 55. Each solid support can comprise at least one assay membrane 205 whereon is provided a plurality of ligands 215.

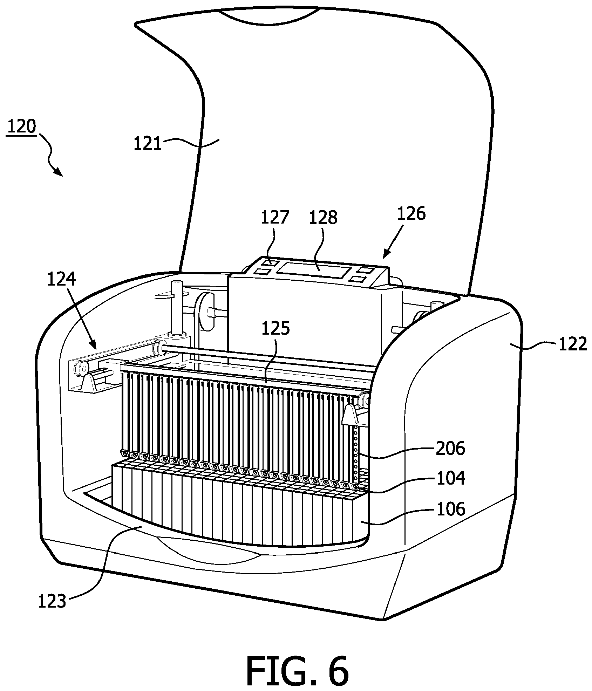

Figure 6 schematically represents a machine 120 comprising a hollow body 122 defining a cavity 129 configured to receive at least one container array 106 comprising a plurality of containers comprising several compartments and at least one solid support array 104, comprising a plurality of solid supports each provided with a sample chamber 44 and further housing at least one assay membrane 206. It will be understood that while the support array 104 is illustrated with one assay membrane 206, said support array 104 may be equipped with more than one assay membrane 206. The base 130 of the machine comprises a docking platform provided with at least one recess 123 configured for docking the container array 106. The top of the hollow body 122 is provided with a lid 121 operably connected to said body 122 and configured to give access to the cavity 129 when in open position (upright position). Translation means 124 are further provided on either sides of the upper portion of said body, said translation means 124 being operably connected to each other via a gripper means 125 used for holding the solid support array 104. Elevation means 131 are provided in the cavity 129 of the machine. In an embodiment, the machine 120 is further provided with control means 126 comprising one or more operating buttons 127 and at least one display 128.

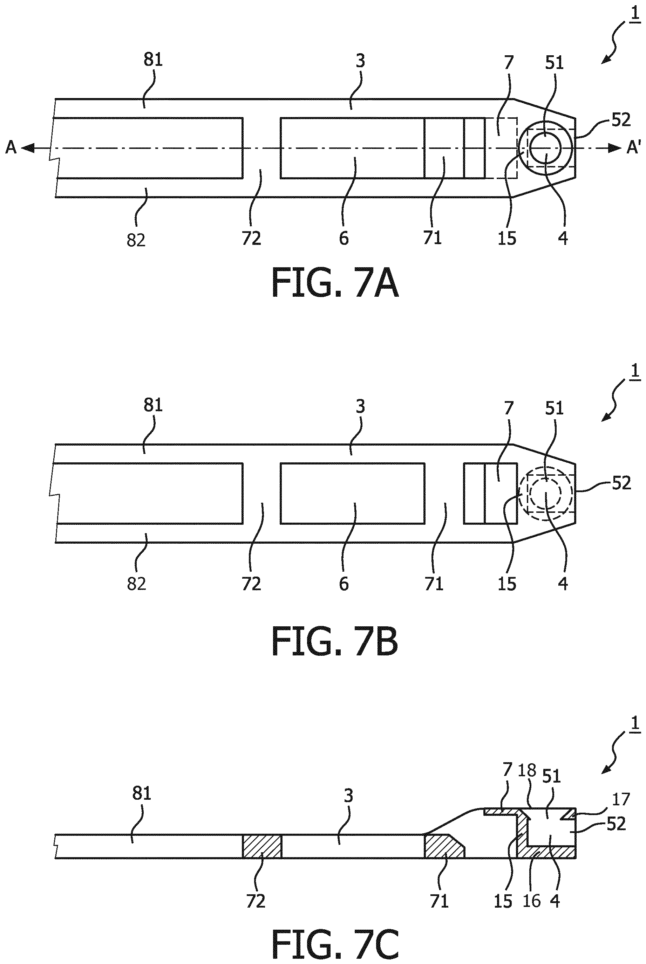

Figure 7A schematically illustrates a front view of an enlarged end part of a solid support 1 comprising a sample chamber 4 (dashed line), wherein the chamber 4 is provided with two openings 51, 52, wherein one opening 51 is located on the front face of said solid support 1 and wherein one opening 52 is located on the bottom face of said solid support 1. Preferably the wall surrounding the opening 51 is slanted. The body 3 of said solid support 1 comprises at least one compartment 6 for holding at least one membrane (not shown). The sample chamber 4 is separated from the compartment 6 by a non-detachable barrier 15. The body 3 further comprises membrane holding means 7, 71 and 72, perpendicular to the axis A-A', and extending from one side 81 of the body to the other side 82. Preferably, the perpendicular membrane holding means 7 is located at the front face of said solid support 1 and the perpendicular membrane holding means 71 and 72 are located at the rear face of said solid support 1.

Figure 7B schematically illustrates a rear view of the solid support 1 of Figure 7A, said solid support 1 comprising a body 3 and at the bottom end of the body 3, a sample chamber 4 (dashed lines). The body 3 comprises at least one compartment 6 for holding at least one assay membrane (not shown). The chamber 4 is provided with two openings 51, 52, (dashed lines) wherein one opening 51 is located on the front face of said solid support 1 and wherein one opening 52 is located on the bottom face of said solid support. Preferably, the wall surrounding the opening 51 is slanted. The sample chamber 4 is separated from the compartment 6 by a non-detachable barrier 15 which is a side wall of said sample chamber 4. The body 3 further comprises perpendicular membrane holding means 7, 71 and 72, extending from one side 81 of the body to the other side 82.

Figure 7C schematically illustrates the side view of a cross-section along the line A-A' of the support 1 illustrated in Figure 7A. The solid support 1 comprises the body 3 and at the end thereof the sample chamber 4. The sample chamber 4 is delimited by six walls (only shown are side wall 15, rear wall 16, parts of front wall 17 and side wall 18). The chamber 4 is provided with two openings 51, 52, wherein one opening 51 is located in front wall 17 on the front face of said solid support 1, and one opening 52 is located on the bottom face of said solid support 1. The body 3 further comprises membrane holding means 7, 71 and 72, with holding means 7 being located at the front face of said solid support 1. The sample chamber 4 is separated from the body 3 by the non-removable barrier 15 (i.e. side wall 15).

While preferred embodiments of the present invention have been shown and described herein, it will be obvious to those skilled in the art that such embodiments are provided by way of example only, the invention being defined by the appended claims.

## Claims

1. A solid support (1) for housing at least one assay membrane (2) comprising:
- a body (3) having a generally planar shape defining a longitudinal axis (A-A'), wherein said body (3) comprises at least one compartment (6) for holding at least one assay membrane (2) and
- a sample chamber (4) provided on one end of the longitudinal axis of said body (3), wherein said sample chamber (4) comprises at least one opening (5),
**characterised in that** said sample chamber (4) is sized such that a sample is held within the sample chamber by means of capillarity, and said sample chamber (4) is separated from said at least one compartment (6) by a non-detachable fluid-impermeable barrier (15).

2. The solid support according to claim 1, wherein said sample chamber (4) comprises at least two openings (51, 52) and wherein the central axes of said at least two openings (51, 52) are not coaxial.

3. The solid support according to claim 2, wherein said sample chamber (4) comprises two openings (51, 52).

4. The solid support according to any one of claims 1 to 3, wherein said solid support (1) defines a front face and a rear face and wherein at least one opening (5) of said sample chamber (4) is located on the front face of said solid support.

5. The solid support according to any one of claims 1 to 4, wherein the ends of the longitudinal axis of said solid support (1) define the top face and the bottom face of said solid support and wherein at least one opening (5) of said sample chamber (4) is located on the bottom face of said solid support.

6. The solid support according to any one of claims 1 to 5, wherein said sample chamber comprises two openings (51) and (52), the first opening (51) being located on the front face of said solid support and the second opening (52) being located on the bottom face of said solid support.

7. The solid support according to any one of claims 1 to 6, further housing at least one assay membrane (2).

8. Use of at least one solid support according to any one of claims 1 to 7 for housing at least one assay membrane (2).

9. Use according to claim 8 in a method for detecting at least one analyte, preferably in an immunoassay.

10. A kit suitable for detecting at least one analyte in a biological sample comprising at least one solid support according to any one of claims 1 to 7 and at least one assay membrane.

11. The kit according to claim 10, further comprising at least one container.

12. A kit suitable for detecting at least one analyte in a biological sample comprising at least one solid support according to any one of claims 1 to 7 and at least one container.

13. The kit according to any one of claims 10 to 12, further comprising at least one machine for automated detection of an analyte in a biological sample.

14. A method for detecting at least one analyte in a biological sample, comprising the steps of:
a) inserting in at least one solid support (1) according to any one of claims 1 to 7, at least one assay membrane (2) comprising at least one ligand (21) which is specific to at least one analyte to be detected,
b) loading said biological sample in the sample chamber (4) of said at least one solid support (1),
c) inserting the loaded solid support (1) of step (b) in at least one container (11) comprising at least one fluid, and
d) detecting at least one analyte.

15. The method according to claim 14, wherein said method is automated.

## Patentansprüche

1. Fester Träger (1) zur Aufnahme zumindest einer Assay-Membran (2), umfassend:
- einen Körper (3) mit einer allgemein ebenflächigen Gestalt, die eine Längsachse (A-A') definiert, wobei der Körper (3) zumindest eine Kammer (6) zum Aufnehmen zumindest einer Assay-Membran (2) umfasst, und
- eine Probenkammer (4), die an einem Ende der Längsachse des Körpers (3) bereitgestellt ist, wobei die Probenkammer (4) zumindest eine Öffnung (5) umfasst,
**dadurch gekennzeichnet, dass** die Probenkammer (4) eine solche Größe aufweist, dass eine Probe durch Kapillarkraft in der Probenkammer gehalten wird, und dass die Probenkammer (4) von der zumindest einen Kammer (6) durch eine nicht lösbare flüssigkeitsundurchlässige Barriere (15) getrennt ist.

2. Fester Träger nach Anspruch 1, wobei die Probenkammer (4) zumindest zwei Öffnungen (51, 52) umfasst und wobei die Mittelachsen der zumindest zwei Öffnungen (51, 52) nicht koaxial sind.

3. Fester Träger nach Anspruch 2, wobei die Probenkammer (4) zwei Öffnungen (51, 52) umfasst.

4. Fester Träger nach einem der Ansprüche 1 bis 3, wobei der feste Träger (1) eine Vorderseite und eine Rückseite definiert und wobei zumindest eine Öffnung (5) der Probenkammer (4) auf der Vorderseite des festen Trägers angeordnet ist.

5. Fester Träger nach einem der Ansprüche 1 bis 4, wobei die Enden der Längsachse des festen Trägers (1) die Oberseite und die Unterseite des festen Trägers definieren und wobei zumindest eine Öffnung (5) der Probenkammer (4) auf der Unterseite des festen Trägers angeordnet ist.

6. Fester Träger nach einem der Ansprüche 1 bis 5, wobei die Probenkammer zwei Öffnungen (51) und (52) umfasst, wobei die erste Öffnung (51) auf der Vorderseite des festen Trägers angeordnet ist und die zweite Öffnung (52) auf der Unterseite des festen Trägers angeordnet ist.

7. Fester Träger nach einem der Ansprüche 1 bis 6, in dem ferner zumindest eine Assay-Membran (2) aufgenommen ist.

8. Verwendung zumindest eines festen Trägers nach einem der Ansprüche 1 bis 7, zum Aufnehmen zumindest einer Assay-Membran (2).

9. Verwendung nach Anspruch 8 in einem Verfahren zum Nachweisen zumindest eines Analyten, vorzugsweise in einem Immunassay.

10. Kit, das zum Nachweisen zumindest eines Analyten in einer biologischen Probe geeignet ist, umfassend zumindest einen festen Träger nach einem der Ansprüche 1 bis 7 und zumindest eine Assay-Membran.

11. Kit nach Anspruch 10, ferner umfassend zumindest einen Behälter.

12. Kit, das zum Nachweisen zumindest eines Analyten in einer biologischen Probe geeignet ist, umfassend zumindest einen festen Träger nach einem der Ansprüche 1 bis 7 und zumindest einen Behälter.

13. Kit nach einem der Ansprüche 10 bis 12, ferner umfassend zumindest eine Maschine für den automatischen Nachweis eines Analyten in einer biologischen Probe.

14. Verfahren zum Nachweisen zumindest eines Analyten in einer biologischen Probe, umfassend die folgenden Schritte:
a) Einführen, in zumindest eines festen Träger (1) nach einem der Ansprüche 1 bis 7, zumindest einer Assay-Membran (2), die zumindest einen Liganden (21) umfasst, der für zumindest einen nachzuweisenden Analyten spezifisch ist,
b) Laden der biologischen Probe in die Probenkammer (4) des zumindest einen festen Trägers (1),
c) Einführen des beladenen festen Trägers (1) aus Schritt (b) in zumindest einen Behälter (11), der zumindest eine Flüssigkeit umfasst, und
d) Nachweisen zumindest eines Analyten.

15. Verfahren nach Anspruch 14, wobei das Verfahren automatisiert ist.

## Revendications

1. Support solide (1) pour loger au moins une membrane de dosage (2) comprenant:
- un corps (3) ayant une forme généralement plane définissant un axe longitudinal (A-A'), ledit corps (3) comprenant au moins un compartiment (6) pour contenir au moins une membrane de dosage (2) et
- une chambre à échantillon (4) prévue sur une extrémité de l'axe longitudinal dudit corps (3), ladite chambre à échantillon (4) comprenant au moins une ouverture (5),
**caractérisé en ce que** ladite chambre d'échantillon (4) est dimensionnée de telle sorte qu'un échantillon est maintenu à l'intérieur de la chambre d'échantillon par capillarité, et ladite chambre d'échantillon (4) est séparée dudit au moins un compartiment (6) par une barrière (15) non démontable et étanche aux fluides.

2. Support solide selon la revendication 1, ladite chambre à échantillon (4) comprenant au moins deux ouvertures (51, 52) et les axes centraux desdites au moins deux ouvertures (51, 52) n'étant pas coaxiaux.

3. Support solide selon la revendication 2, ladite chambre à échantillon (4) comprenant deux ouvertures (51, 52).

4. Support solide selon l'une quelconque des revendications 1 à 3, ledit support solide (1) définissant une face avant et une face arrière et au moins une ouverture (5) de ladite chambre à échantillon (4) étant située sur la face avant dudit support solide.

5. Support solide selon l'une quelconque des revendications 1 à 4, les extrémités de l'axe longitudinal dudit support solide (1) définissant la face supérieure et la face inférieure dudit support solide et au moins une ouverture (5) de ladite chambre à échantillon (4) étant située sur la face inférieure dudit support solide.

6. Support solide selon l'une quelconque des revendications 1 à 5, ladite chambre à échantillon comprenant deux ouvertures (51) et (52), la première ouverture (51) étant située sur la face avant dudit support solide et la seconde ouverture (52) étant située sur la face inférieure dudit support solide.

7. Support solide selon l'une quelconque des revendications 1 à 6, logeant en outre au moins une membrane de dosage (2).

8. Utilisation d'au moins un support solide selon l'une quelconque des revendications 1 à 7 pour loger au moins une membrane de dosage (2).

9. Utilisation selon la revendication 8, dans un procédé de détection d'au moins un analyte, de préférence dans un essai immunologique.

10. Kit approprié pour la détection d'au moins un analyte dans un échantillon biologique comprenant au moins un support solide selon l'une quelconque des revendications 1 à 7 et au moins une membrane de dosage.

11. Kit selon la revendication 10, comprenant en outre au moins un récipient.

12. Kit approprié pour la détection d'au moins un analyte dans un échantillon biologique comprenant au moins un support solide selon l'une quelconque des revendications 1 à 7 et au moins un récipient.

13. Kit selon l'une quelconque des revendications 10 à 12, comprenant en outre au moins une machine pour la détection automatique d'un analyte dans un échantillon biologique.

14. Procédé de détection d'au moins un analyte dans un échantillon biologique, comprenant les étapes consistant en :
a) l'insertion dans au moins un support solide (1) selon l'une quelconque des revendications 1 à 7, d'au moins une membrane de dosage (2) comprenant au moins un ligand (21) qui est spécifique d'au moins un analyte à détecter,
b) le chargement dudit échantillon biologique dans la chambre à échantillon (4) dudit au moins un support solide (1),
c) l'insertion du support solide chargé (1) de l'étape (b) dans au moins un récipient (11) comprenant au moins un fluide, et
d) la détection d'au moins un analyte.

15. Procédé selon la revendication 14, ledit procédé étant automatisé.
